Europäisches Patentamt

European Patent Office

(11) Numéro de publication: **0 082 028**

Office européen des brevets

**B1**

(12) **FASCICULE DE BREVET EUROPÉEN**

(45) Date de publication du fascicule du brevet:
23.07.86

(21) Numéro de dépôt: **82401853.5**

(22) Date de dépôt: **08.10.82**

(51) Int. Cl.⁴: **B 23 B 45/00,** B 24 B 23/00,
B 23 Q 1/00, B 25 B 21/00,
G 09 F 9/00

(54) **Machine, notamment perceuse électrique.**

(30) Priorité: **15.12.81 FR 8123386**

(43) Date de publication de la demande:
**22.06.83 Bulletin 83/25**

(45) Mention de la délivrance du brevet:
**23.07.86 Bulletin 86/30**

(84) Etats contractants désignés:
**AT BE CH DE GB IT LI LU NL SE**

(56) Documents cité:
**EP-A-0 024 480**
**GB-A-812 287**
**US-A-4 219 808**

(73) Titulaire: **Peugeot Outillage Electrique, Société
dite:, 66/78 avenue François Arago, F-92000
Nanterre (FR)**

(72) Inventeur: **Roger, Jean, 1, Avenue du Bois
Méresse, F-78000 Conflans Sainte Honorine (FR)**

(74) Mandataire: **Moncheny, Michel, c/o Cabinet
Lavoix 2 Place d'Estienne d'Orves, F-75441 Paris
Cedex 09 (FR)**

LIBER, STOCKHOLM 1986

EP 0 082 028 B1

## Description

La présente invention concerne les machines portatives telles que les perceuses et se rapporte plus particulièrement à une perceuse électrique à plusieurs vitesses de rotation de la broche.

Pour qu'une perceuse soit adaptable à divers diamètres de perçage dans différents matériaux tels que bois, métaux, béton ou autre, il est souhaitable qu'elle soit pourvue de moyens de réglage à plusieurs valeurs de la vitesse de sortie de son mandrin.

On connaît des machines de ce type pourvues d'un variateur de vitesse électronique.

Ces machines qui comportent généralement un réducteur à deux rapports, associé au moteur d'entraînement de la broche et commandé par un organe manuel de changement de rapport risquent de fonctionner dans de mauvaises conditions de vitesse et de couple dans la mesure ou le variateur électronique commande la vitesse de sortie de la broche sans tenir compte du rapport mécanique engagé.

On connaît des perceuses à variateur de vitesse électronique qui comportent des moyens d'affichage instantanés de la vitesse de rotation de la machine.

Cependant, un tel affichage ne fait que donner une indication sur les conditions dans lesquelles la machine est utilisée sans suggérer à l'utilisateur les conditions optimales d'emploi compte tenu de la matière traitée et de la section des perçages à réaliser.

Il en résulte souvent une usure des forêts due à une utilisation à des vitesses de rotation inadéquates.

Par ailleurs, le moteur de la machine peut être soumis à des échauffements excessifs générateurs de pannes graves. EP-A-24480 décrit une machine du type précité comprenant un commutateur de changement de rapport mécanique ainsi que des moyens d'affichage de la vitesse de rotation du moteur électrique en fonction du rapport mécanique choisi.

L'invention vise à remédier aux inconvénients précités en créant une machine notamment une perceuse électrique qui puisse être toujours utilisée dans les conditions optimales de couple et de vitesse de rotation quels que soient les travaux à effectuer et la nature des matériaux à percer.

Elle a donc pour objet une machine notamment une perceuse électrique comportant un moteur électrique d'entraînement, un réducteur à au moins deux rapports mécaniques couplé sur l'arbre de sortie du moteur, des moyens de changement de rapport mécanique, un variateur de vitesse du moteur électrique et des moyens de sélection et d'affichage des vitesses de rotation du moteur électrique couplés auxdits moyens de changement de rapport mécanique, caractérisée en ce que lesdits moyens de sélection et d'affichage comprennent un dispositif d'affichage, des moyens électroniques de commande du dispositif d'affichage en fonction des nombres à afficher, des premiers moyens de commutation couplés aux moyens de changement de rapport mécanique pour placer lesdits moyens de commande électronique dans un état de commande d'affichage d'un groupe de nombres correspondant à la position desdits premiers moyens de commutation et des seconds moyens de commutation pour placer lesdits moyens de commande électronique dans un état de commande d'affichage, d'un nombre parmi ledit groupe de nombres.

Grâce à un tel agencement, l'utilisateur peut connaître avant la mise en route de la machine, sa vitesse de rotation ou sa cadence de fonctionnement avec une précision suffisante, ce qui est particulièrement utile pour des machines utilisant des accessoires divers dont la vitesse de travail recommandée est variable d'un outil à l'autre, pour des raisons de qualité du travail, de sécurité ou de confort pour l'utilisateur, de durée de vie, etc.

Par ailleurs, connaissant à l'avance la vitesse de rotation de la machine, l'utilisateur peut parfaire les réglages mécanique et électronique de la machine avant de commencer son travail.

D'autres caractéristiques d'une réalisation l'invention apparaitront au cours de la description qui va suivre, faite en référence aux dessins annexés, donnés uniquement à titre d'exemple et sur lesquels:
- la Fig. 1 est une vue schématiqué en perspective d'une perceuse électrique suivant la réalisation;  - la Fig. 2 est un schéma électrique d'un étage du circuit d'affichage de la perceuse suivant la réalisation représentée à la Fig.1;
- la Fig. 3 est un schéma électrique du circuit d'alimentation des moyens d'affichage;
- la Fig. 4 représente les chiffres qui peuvent être affichés au moyen de l'étage de la Fig.2,
- la Fig. 5 est un schéma complet du circuit d'affichage de la perceuse simplifié par suppression des composants redondants et conçu en fonction de la série de nombres correspondant au tableau de vitesses donné à la Fig.1;
- la Fig. 6 est une vue partielle en élévation et en coupe de la partie de la perceuse de la Fig.1 contenant les moyens de couplage entre le mécanisme de changement de rapport mécanique et le variateur électronique;
- la Fig. 7 est une vue partielle en coupe, de dessus, des moyens de couplage de la Fig. 6; et
- la Fig. 8 est une vue partielle en élévation et en coupe d'une variante des moyens de couplage de la Fig. 6.

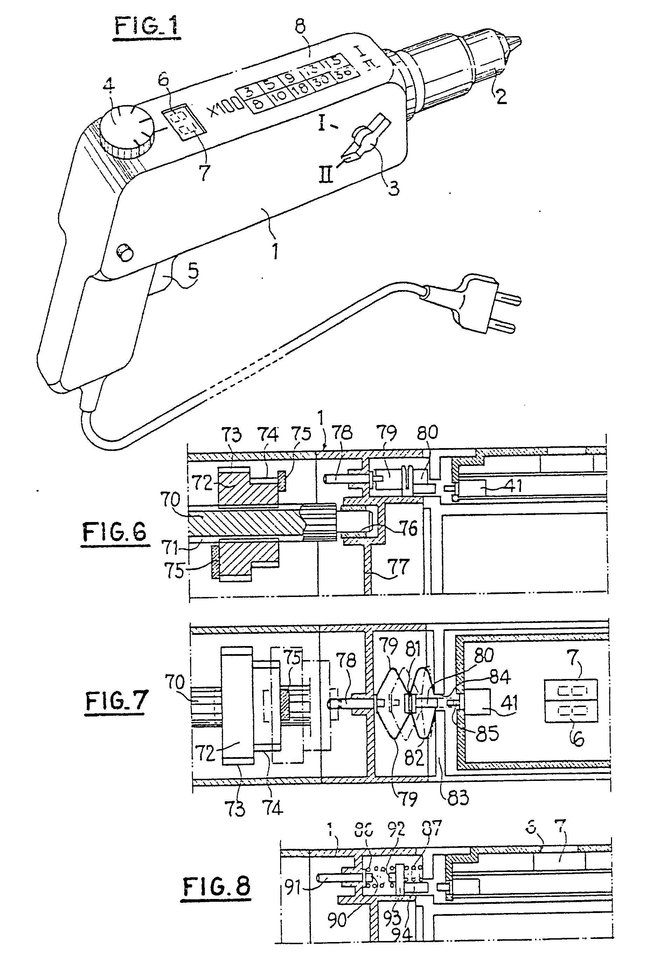

Sur la Fig. 1, l'invention est considérée comme appliquée à une perceuse électrique qui comporte un corps 1 contenant un moteur électrique d'entraînement en rotation d'un mandrin 2, un mécanisme réducteur à deux rapports mécaniques dont le changement est commandé par un bouton 3 à deux positions, un variateur de vitesse électronique commandé par un bouton de réglage 4 et un interrupteur 5 de mise en marche et d'arrêt du moteur électrique.

Dans la partie supérieure du corps 1, est ménagée une fenêtre 6 pour un dispositif 7 d'affichage de la vitesse déterminée par le variateur électronique.

Ce dispositif d'affichage est constitué de façon classique par deux séries de diodes électroluminescentes q constituent chacune les sept segments déterminant les chiffres 0 à 9 et dont l'allumage sélectif perment d'afficher des chiffres choisis.

Sur la partie supérieure de la perceuse est en outre prévu un tableau 8 de vitesses formé de deux lignes I et II correspondant respectivement aux rapports mécaniques I et II déterminés par la position du bouton de manoeuvre 3.

Dans le présent mode de réalisation, le tableau 8 comporte cinq colonnes correspondant respectivement â cinq positions A,B,C,D,E, du commutateur actionné par le bouton 4 de réglage du variateur électronique.

On voit sur le tableau 8 que chacun des nombres affichés est représenté par sa partie significative des centaines et des milliers, les unités et les dizaines étant obtenues par une multiplication par 100 indiquée à côté du tableau 8.

Ce tableau représenté ci-après comporte donc dix valeurs de vitesses recommandées, à savoir cinq valeurs correspondant au rapport mécanique I et cinq valeurs correspondant au rapport mécanique II.

| A | B | C | D | E | |
|---|---|---|---|---|---|
| 3 | 5 | 9 | 13 | 15 | × 100 tours. |
| 8 | 10 | 18 | 30 | 36 | |

On voit que la première colonne de ce tableau correspond au régime du moteur le plus faible et que le régime augmente quand on se déplace vers les colonnes de droite.

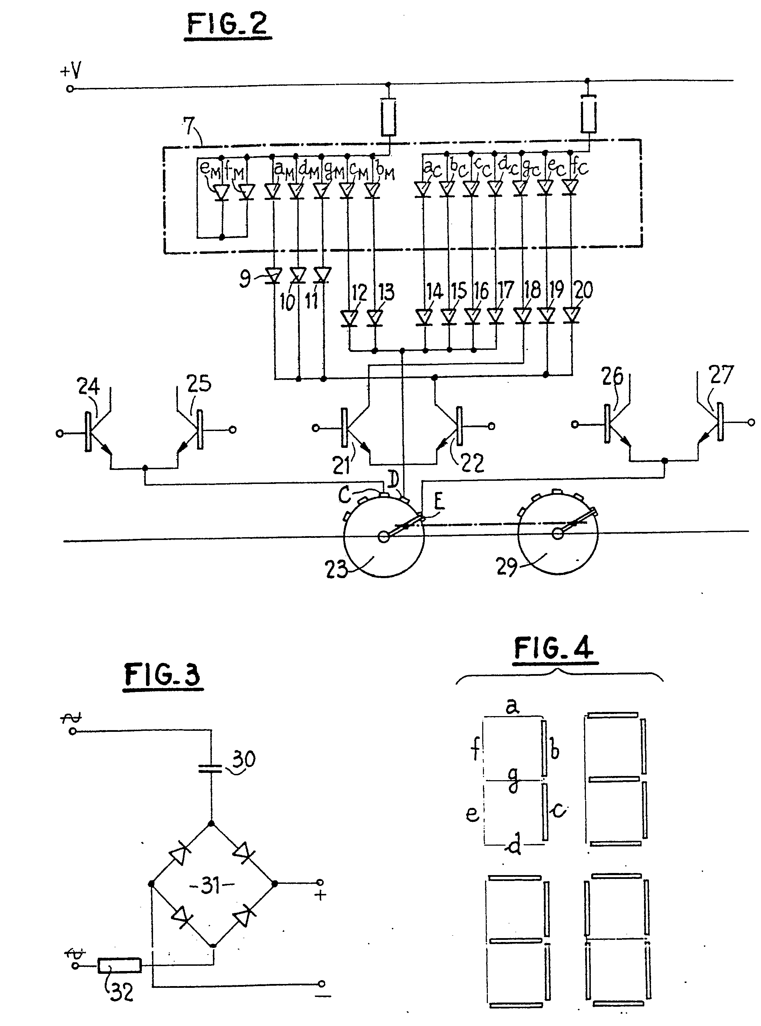

Le schéma de la Fig.2 est un schéma général montrant la manière dont est réalisé le circuit de commande d'affichage de la colonne D du tableau 8, étant entendu que les circuits de commande des autres colonnes sont réalisés de façon analogue.

L'affichage de la colonne D est matérialisé sur la Fig.4 sur laquelle on voit que chaque segment destiné à former une portion de chiffre lors de son allumage est désigné par une lettre a à g. On voit sur cette figure que pour afficher le chiffre 13 correspondant à une vitesse de rotation de 1300 t/mm de la broche, il faut allumer les segments $a_c$, $b_c$, $c_c$, $d_c$, $g_c$ des centaines et les segments $b_m$, $c_m$ des milliers. pour afficher le chiffre 30 correspondant à 3000 t/mn, il faut allumer les segments $a_c$, $b_c$, $c_c$, $d_c$, $e_c$, $f_c$, et $a_m$, $b_m$, $c_m$, $d_m$, $g_m$.

Il convient de remarquer immédiatement que pour cette colonne, certains des segments sont allumés en permanence.

Il s'agit des segments $a_c$,$b_c$,$c_c$,$d_c$ des centaines et $b_m$,$c_m$ des milliers.

On va tenir compte de cette particularité en constituant l'étage représenté à la Fig.2.

Cet étage comporte le dispositif d'affichage 7 qui apparaît dans la fenêtre 6 du boîtier de la perceuse représentée à la Fig. 1.

Sur la Fig. 2, le dispositif d'affichage 7 proprement dit est entouré par un rectangle en trait mixte.

Il est constitué de deux séries de diodes électroluminescentes $a_c$ à $g_c$ et $a_m$ à $g_m$ qui représentent chacune sur des segments des chiffres du dispositif d'affichage.

Ces diodes électroluminescentes sont alimentées par une source de tension redressée telle que la source d'alimentation représentée à la Fig.3.

Dans le présent exemple, leurs anodes sont connectées au pole positif de ladite source, tandis que leurs cathodes sont respectivement branchées par l'intermédiaire de diodes 9 à 20, soit en série avec le trajet collecteur-émetteur d'un transistor 21 dont la base est connectée de façon à être excitée lorsque le bouton 3 de la perceuse se trouve sur la position I de petite vitesse, soit en série avec le trajet collecteur-émetteur d'un transistor 22 dont la base est connectée de façon à être excitée lorsque le bouton 3 de la perceuse se trouve sur la position II de grande vitesse, soit encore directement au pôle négatif de la source lorsque les diodes électroluminescentes correspondantes doivent être allumées en permanence.

Les émetteurs des transistors 21 et 22 sont tous deux connectés à un plot fixe D d'un commutateur 23 à cinq positions dont le contact mobile 24 est entraîné par le bouton de commande 4 de la perceuse représentée à la Fig. 1.

Ainsi étant donné que pour afficher les nombre 13 ou 30, les segments $a_c$, $b_c$, $c_c$, $d_c$, des centaines et des segments $b_m$, $c_m$, des milliers doivent être allumés en permanence, les diodes électroluminescentes $a_c$, $b_c$, $c_c$, $d_c$, $b_m$ et $c_m$ correspondantes sont connectées directement en série avec leur diodes respectives 14, 15, 16, 17, 12, 13 au plot D du commutateur 23.

Le segment $g_c$ doit être allumé pour l'affichage du nombre 13, de sorte que la diode électroluminescente $g_c$ est connectée en série avec sa diode 18 au collecteur du transistor 21 rendu conducteur lorsque le bouton 3 de changement de rapport mécanique se trouve sur le rapport I.

Pou l'affichage du nombre 30 doivent en outre être allumé les segments $2_c$, $f_c$ des centaines et $a_m$, $d_m$, $g_m$ des milliers.

Les diodes électroluminescentes $e_c$, $f_c$, $a_m$, $d_m$ et $g_m$ sont donc connectées en série avec leur diodes 19, 20, 9, 10, 11 associées, au collecteur du transistor 22 rendu conducteur lorsque le bouton 3 de changement de rapport mécanique se trouve sur le rapport II des grandes vitesses.

Les diodes $e_m$ et $f_m$ qui ne sont allumées pour aucun des chiffres du tableau sont court-circuitées.

Les autres étages du circuit de commande d'affichage qui correspondent respectivement aux position A, B, C et E du bouton 4, sont semblable au circuit de la Fig. 2, sur laqulle on a représenté les tranistors 25, 26 connectés au plot fixe C et les transistors 27, 28 connectés au plot fixe E.

Les connexions de ces transistors aux diodes électroluminescentes $a_c$ à $g_c$ et $a_m$ à $b_m$ sont fonction des nombres à afficher par les étages considérés à savoir 9 et 18 pour la colonne C et 15 et 36 pour la colonne E.

Ainsi qu'on peut le voir à la Fig. 2, au commutateur 23 de commande d'affichage est couplé mécaniquement un autre commutateur 29 ayant autant de positions que le commutateur 23 et destiné à être connecté à un variateur de vitesse non représenté, par l'intermédiaire de l'interrupteur de marche arrêt 5 (Fig.1).

Le variateur de vitesse peut être avantageusement du type décrit aux brevets français n° 2 352 424 et 2 352 434.

Ainsi l'affichage d'une valeur de vitesse correspond au réglage du variateur de vitesse.

L'alimentation des diodes électroluminescentes est assurée à l'aide du circuit de la Fig.3.

Ce circuit comporte un condensateur 30 connecté aux bornes du secteur en série avec un pont redresseur 31 à double alternance et une résistance 32. Le condensateur 30 assure le réglage du courant et évite l'échauffement du circuit, ce qui rend son emploi avantageux vis à vis de celui d'une résistance de puissance.

L'alimentation des diodes électroluminescentes est prise sur celle des diagonales du pont 31 qui n'est pas connectée au condensateur 30 et à la résistance 32.

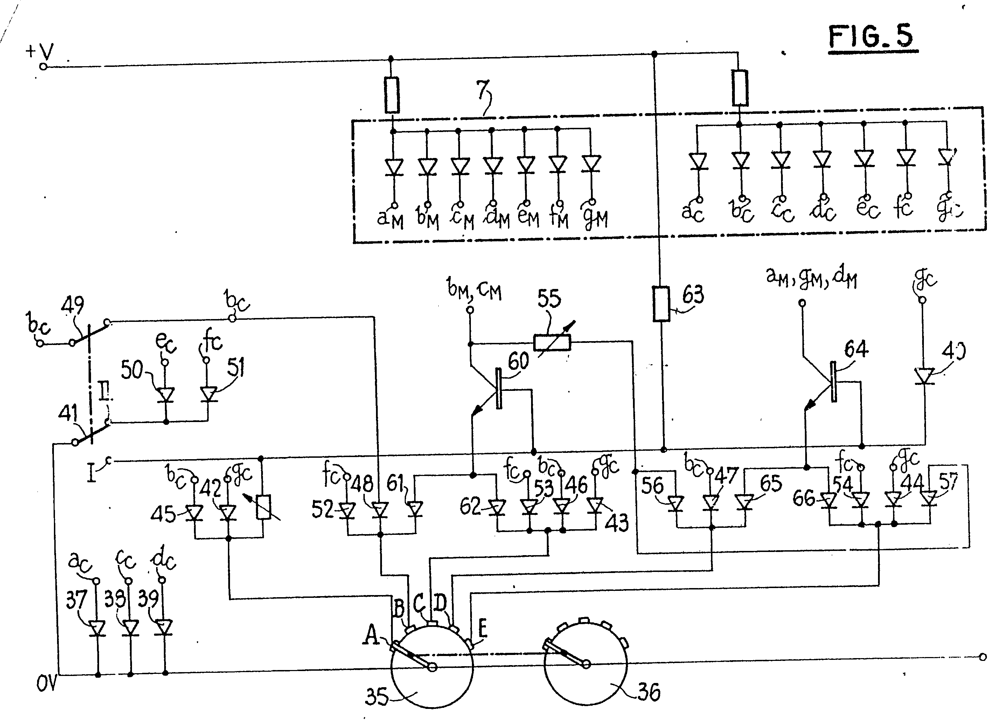

Le circuit représenté à la Fig.5 est conçu à partir du circuit de la Fig.2 dans un souci de simplification maximale et de réduction au minimum du nombre des composants entrant dans sa construction.

Il comporte comme le circuit de la Fig.2, un dispositif d'affichage constitué par deux séries de diodes $a_c$ à $g_c$ et $a_m$ à $g_m$. Mais au lieu de comporter deux transistors par étage comme le circuit de la Fig.2, il ne comporte au total que trois transistors.

Ce résultat est obtenu en supprimant tous les composants qui, compte tenu de la nature des nombres du tableau 8, ne seraient jamais utilisés.

Le circuit de la Fig.5 comporte donc un commutateur 35 à cinq positions couplé mécaniquement à un commutateur 36 de commande du variateur de vitesse de la perceuse non représenté et commandé par le bouton 4 de la perceuse (Fig. 1).

Il comporte comme le circuit de la Fig.2, un dispositif d'affichage 7 formé de deux groupes de sept diodes électroluminescentes $a_c$ à $g_c$ représentant les chiffres des centaines et $a_m$ à $g_m$ représentant les chiffres des milliers des nombres à afficher correspondant aux vitesses choisies à l'aide du bouton de sèlection 4 (Fig.1).

Le dispositif d'affichage est commandé comme dans le cas de la Fig.2 par des transistors et des diodes.

Cependant, la Demanderesse a constaté que le nombre de ses composants pouvant être fortement réduit en raison de l'inutilité de certains de ces composants dans un circuit semblable à celui de la Fig.2, compte tenu du tableau de vitesses 8 à afficher.

Si l'on se reporte à ce tableau, on remarque en effet que les segments a,c,d, des centaines doivent toujours être alimentés quel que soit le nombre du tableau 8 sélectionné.

Il en résulte que les diodes électroluminescentes $a_c$, $c_c$ et $d_c$ sont connectées en permanence aux bornes de l'alimentation du circuit représentée à la Fig.3, en série respectivement avec des diodes 37, 38, 39.

Ainsi qu'on peut le voir à la Fig.5, les connexions des diodes électroluminescentes avec les composants déterminant leur conduction ou leur blocage sont matérialisées par le report de la référence de chaque diode électroluminescente sur la borne correspondante du composant auquel elle est connectée.

Le segment g des centaines doit être éclairé pour toutes les valeurs du groupe I des petites vitesses.

Par conséquent, la diode électroluminescente $g_c$ devant être alimentée en permanence lorsque le bouton 3 de changement de rapport mécanique (Fig.1) se trouve sur la position 1, cette diode est connectée aux bornes de la source d'alimentation du circuit, en série avec une diode 40 par l'intermédiaire d'un commutateur 41 actionné par le bouton 3 de la manière représentée aux Fig. 6 à 8 auxquelles on reviendra par la suite.

Dans le présent exemple, le commutateur 41 présente deux contacts fixes I et II qui correspondent respectivement aux groupes de vitesses I et II du tableau 8 de la Fig.1.

Par ailleurs, le segment g des centaines doit être éclairé pour trois des valeurs du groupe II des grandes vitesses à savoir 8,18 et 36.

A cet effet, la diode électroluminescente $g_c$ des centaines est de plus connectée respectivement en série avec trois diodes 42,43,44 connectées chacune à un plot fixe A,C,E du commutateur de sélection 35 couplé au bouton de commande 4 (Fig.1).

Grâce à un raisonnement analogue au précédent relatif aux segments b,c et f des centaines fait à partir du tableau de nombres à afficher, la diode électroluminescente $b_c$ est connectée en série avec une diode 45 au plot A du commutateur 35, en série avec une diode 46 au plot C du commutateur 35 et en série avec une diode 47 au plot D du commutateur 35.

Ainsi le segment b des centaines est allumé lorsque le commutateur 35 est placé sur les plots A,C et D. Le tableau 8 montre que dans ces positions, le segment b des centaines doit également être allumé pour participer à l'affichage des nombres 8,18 et 30 de la ligne des grandes vitesses. Les connexions décrites ci-dessus pour les petites vitesses permettent également l'allumage du segment b pour les grandes vitesses lorsque le commutateur 35 est dans l'une des positions A, C ou D.

Lorsque le commutateur 35 est dans la position B, il doit y avoir affichage du nombre 5 des petites vitesses ou du nombre 10 des grandes vitesses.

On voit que pour l'affichage du nombre 5, le segment b des centaines doit être éteint alors que pour l'affichage du nombre 10 il doit être allumé.

**0 082 028**

A cet effet la diode électroluminescente $b_c$ est connectée au plot B du commutateur 35 par une diode en série avec un interrupteur 49 couplé mécaniquement au commutateur 41 et qui est fermé lorsque ce commutateur se trouve sur la position II des grandes vitesses.

Enfin, dans la position E du commutateur 35, les nombres 15 et 36 à afficher ne nécessitent ni l'un ni l'autre l'allumage du segment b de sorte qu'il n'y a pas de connexion de la diode $b_c$ des centaines au plot E.

Le segment c des centaines ne doit figurer dans aucun des nombres du groupe I des petites vitesses et dans tous les nombres du groupe II des grandes vitesses.

En conséquence, la diode électroluminescente $e_c$ est connectée aux bornes de l'alimentation en série avec une diode 50 et le contact fixe II du commutateur 41.

Le segment f des centaines doit apparaître lui aussi dans les nombres du groupe II de sorte que la diode électroluminescente $f_c$ est connectée elle aussi par une diode 51 au contact fixe II du commutateur 41.

Mais le segment f des centaines doit également participer à l'affichage des nombres 5,9 et 15 du groupe I des petites vitesses.

La diode électroluminescente $f_c$ est donc également connectée au plot 3 du commutateur 35 par une diode 52 et aux plots C et E de celui-ci par des diodes respectives 53 et 54.

Le groupe de diodes électroluminescentes $a_m$ à $g_m$ d'affichage des milliers est branché selon le même principe que le groupe des centaines.

On constate que pour les petites et pour les grandes vitesses, les segments b et c des milliers doivent être allumés pour les positions D et E du commutateur 35.

Les diodes électroluminescentes $b_m$ et $c_m$ sont donc connectées par l'intermédiaire d'une résistance variable 55 et de deux diodes 56, 57, aux plots D et E du commutateur 35.

Les segments b et c des milliers doivent en outre s'allumer pour représenter tous les nombres du groupe II des grandes vitesses à l'exception du nombre 8.

Les diodes électroluminescentes $b_m$, $c_m$ sont donc de plus connectées aux plots B et C par l'intermédiaire du trajet collecteur-émetteur d'un transistor 60. L'émetteur de ce transistor est connecté aux plots B et C par des diodes respectives 61 et 82, tandis que sa base est reliée au contact fixe I du commutateur 41. Ainsi, le transistor 80 est bloqué lorsque le commutateur 41 est dans la position 1 correspondant aux petites vitesses.

La base du transistor 80 est en outre connectée à la borne positive de l'alimentation par une résistance 83 qui provoque sa conduction lorsque le commutateur 41 est placé sur sa position II des grandes vitesses.

Pour permettre l'affichage des nombres 30 et 38 dans les positions D et E du commutateur 35, les segments a, d et g des milliers doivent être allumés lorsque le commutateur 41 commandé par le bouton 3 de changement de rapport se trouve sur la position II correspondant aux grandes vitesses.

A cet effet, les diodes électroluminescentes $a_m$, $d_m$ et $g_m$ sont connectées aux plots D et E du commutateur 35 par l'intermédiaire du trajet collecteur-émetteur d'un autre transistor 64 en série avec des diodes respectives 65, 66. La base du transistor 84 est connectée au contact fixe I du commutateur 41 et à la résistance 63 connectée par ailleurs à la borne positive +V de la source d'alimentation.

Les simplifications apportées au circuit de la Fig. 5 compte tenu du tableau de valeurs de vitesses à afficher ont pour résultat que seuls les nombres de ce tableau peuvent apparaître dans la fenêtre 6.

Par ailleurs, les nombres de la ligne I des petites vitesses ne peuvent apparaître que si le commutateur 41 se trouve sur le position I, tandis que les nombres de la ligne II des grandes vitesses ne peuvent apparaître que si le commutateur se trouve sur la position II.

Ainsi, l'utilisateur ne pourra faire fonctionner sa machine que dans des plages de vitesses choisies par le constructeur en fonction des diamètres de perçage et des materiaux a percer.

Le tableau 8 (Fig. 1) sur lequel ces valeurs sont indiquées assiste l'utilisateur dans son choix.

Le couplage mécanique entre les moyens de changement de rapport mécanique actionnés par le bouton 3 de la perceuse de la Fig. 1 et le commutateur 41 du circuit de la Fig. 5 va maintenant être décrit en référence aux Fig. 6 et 7.

On a représenté aux Fig.6 et 7, la partie de la perceuse de la Fig.1 comportant la broche 70 de celle-ci qui présente des cannelures 71 et sur laquelle est montée une roue 72 à deux dentures 73,74 qui correspondent chacune à un rapport mécanique, lesdites dentures engrenant avec un pignon calé sur l'arbre de sortie d'un moteur électrique d'entraînement non représenté.

La roue 72 est déplaçable en translation le long de la broche 70 par une fourchette 75 actionnée par le bouton 3 (Fig. 1).

L'extrémité intérieure de la broche 70 est montée dans un palier 76 ménagé dans une paroi transversale 77 du boîtier 1. Au-dessus du palier 76 est monté à coulissement dans la paroi transversale 77, un poussoir 78 destiné à être actionné par la fourchette 75 et qui porte à son extrémité opposée à celle-ci un ressort à lame 79 en forme de losange.

La branche du ressort 79 opposée au poussoir 78 est pourvue à peu près en regard dudit poussoir d'un doigt 80 déplaçable parallèlement au poussoir.

Le doigt 80 présente une tête 81 par laquelle il est fixe au ressort 79 en même temps qu'un second ressort à lame en losange 82 moins raide que le ressort 79 et prenant appui contre une cloison 83 du boîtier 1.

La cloison 83 présente un passage 84 destiné à permettre les déplacements du doigt 80 au-delà de ladite cloison et sa venue en contact avec l'organe mobile 85 du commutateur 41 du circuit de la Fig. 5.

La course de l'organe mobile 85 du commutateur 41 est beaucoup plus faible que celle de la fourchette 75 de changement de rapport mécanique, de sorte que l'ensemble constitué par le poussoir 78, les ressorts 79, 82 et le

5

doigt 80 constitue un réducteur de course et empêche une commutation intempestive du commutateur 41 sous l'effet de vibrations.

Dans la position représentée à la Fig. 6, cet ensemble occupe la position du rapport 1. On voit d'ailleurs que la fourchette 75 se trouve à une certaine distance du poussoir 78, de sorte que celui-ci n'est sollicité qu'à la fin de la course de passage de la fourchette du rapport I au rapport II.

Lorsque la fourchette actionnée par le bouton 3 (Fig. 1) entre en contact avec le poussoir 78, celui-ci est repoussé vers la droite de la Fig.6 et du fait que le ressort 79 est plus raide que le ressort 82, il y a compression de ce dernier et avance du doigt 80 jusqu'au contact avec l'organe mobile 85 du commutateur 41. Ensuite, la résistance du ressort 82 se faisant plus forte sous l'effet de sa compression, le ressort 79 tout en s'écrasant légèrement transmet l'effort du poussoir 78, au doigt 80 et à l'organe mobile 85 du commutateur 41 pour provoquer sa commutation sur le rapport II.

En fin de course, les divers éléments de l'ensemble occupent les positions relatives représentées en trait mixte à la Fig. 7.

On voit que dans cette position, les effets des vibrations de la machine sont absorbés par les ressorts 79 et 82 qui se trouvent sous tension.

Dans la position correspondant au rapport I représentée en trait plein à la Fig.7, les ressorts 79 et 82 présentent une tension résiduelle suffisante pour éviter également une commutation intempestive du commutateur 41.

Bien entendu, lors d'un changement de rapport suivant, les divers organes reprennent leurs positions respectives représentées en trait plein aux Fig.6 et 7.

La variante représentée à la Fig. 8 diffère du dispositif des Fig. 6 et 7 en ce que les ressorts à lame de celui-ci sont remplacés par des ressorts hélicoïdaux 86, 87. Le ressort 86 est monté entre une saillie 90 du poussoir 91 destiné à coopérer avec la fourchette 75 et une saillie 92 prévue sur une pièce intermédiaire 93 portant le doigt 94 d'actionnement du commutateur 41. Le ressort 87 prend appui entre la pièce intermédiaire 93 et la cloison 83.

Le fonctionnement du dispositif de l'invention découle de sa construction qui a été décrite en détail ci-dessus.

Il convient cependant de préciser que la sélection et l'affichage de la vitesse par l'utilisateur ont lieu lors de la connexion au secteur de la prise d'alimentation de la machine, avant la mise en route du moteur d'entraînement de celui-ci.

Ceci implique que le dispositif d'affichage d'une part et le variateur de vitesse et le moteur électrique d'autre part soient alimentés séparément.

A cet effet, le bouton 4 de commande du dispositif d'affichage actionne simultanément le commutateur 23 du dispositif d'affichage de la Fig.2 et le commutateur 29 de réglage du variateur de vitesse, ou bien des éléments correspondants 35 et 36 du dispositif de la Fig. 5.

La mise en marche du moteur est assurée par l'interrupteur de marche-arrêt 5 (Fig.1) connecté en aval du commutateur 29 de la Fig. 2 ou du commutateur 36 de la Fig. 5.

Il en résulte que dès la connexion de la prise de la perceuse au secteur, le dispositif d'affichage 7 peut indiquer dans quelles condictions machine va fonctionner quand on agira sur l'interrupteur à gachette 5.

Le dispositif d'affichage suivant l'invention donne par conséquent dès le raccordement de la machine au secteur, les conditions de vitesse ou de cadence de broche prévisibles, la valeur indiquée sur le dispositif d'affichage étant fonction de la position des moyens de commande du rapport mécanique de la machine et du variateur de vitesse de son moteur électrique d'entraînement.

Grâce au couplage de ces moyens de commande entre eux, il n'existe aucune ambigüité entre les vitesses affichées et les valeurs respectives du rapport mécanique et du réglage du variateur de vitesse.

Dans les modes de réalisation qui viennent d'être décrits, la machine à laquelle est appliquée l'invention comporte deux rapports mécaniques. On comprendra toutefois que l'invention s'applique aussi bien à une machine présentant un nombre de rapports mécaniques supérieur à deux.

**Revendications**

1. Machine notamment perceuse électrique comportant un moteur électrique d'entraînement, un réducteur à au moins deux rapports mécaniques couplé sur l'arbre de sortie du moteur, des moyens (3, 72, 75) de changement de rapport mécanique, un variateur de vitesse du moteur électrique et des moyens (7, 35, 36, 41) de sélection et d'affichage des vitesses de rotation du moteur électrique couplés auxdits moyens de changement de rapport mécanique, caractérisée en ce que lesdits moyens de sélection et d'affichage comprennent un dispositif d'affichage (7), des moyens electroniques (9 à 27; 37 à 66) de commande du dispositif d'affichage (7) en fonction des nombres à afficher, des premiers moyens de commutation (41) couplés aux moyens (3, 72, 75) de changement de rapport mécanique pour placer lesdits moyens de commande électroniques (9 à 27; 37 à 66) dans un état de commande d'affichage d'un groupe de nombres correspondant à la position desdits premiers moyens de commutation et des seconds moyens de commutation (23; 35) pour placer lesdits moyens de commande électronique dans un état de commande d'affichage d'un nombre parmi ledit groupe de nombres.

2. Machine suivant la revendication 1, caractérisée en ce que lesdits premiers moyens de commutation (41) sont constitués par un commutateur dont l'organe mobile (85) est lié mécaniquement aux moyens de changement de rapport mécanique par l'intermédiaire d'un ensemble d'adaptation de la course des moyens de changement de rapport mécanique à celle de l'organe mobile (85) dudit commutateur (41).

6

3. Machine suivant la revendication 2, dont les moyens de changement de rapport mécanique comportent une ourchette (75) de déplacement axial d'une roue (72) à au moins deux dentures, le long de la broche de ladite machine, ladite fourchette étant reliée mécaniquement à un bouton de manoeuvre (3), caractérisée en ce que ledit ensemble d'adaptation comporte un poussoir (78;91) destiné à être actionné par ladite fourchette (75) et portant à son extrémité opposée à celle-ci un premier organe élastique (79; 86) d'actionnement d'un doigt (80; 94) destiné à venir en contact avec l'organe mobile (85) du commutateur.

4. Machine suivant la revendication 2, caractérisée en ce qu'entre ledit premier organe élastique (79; 86) et une cloison fixe (83) de la machine, est placé un second organe élastique (82; 87) moins raide que le premier destiné à réduire au minimum les vibrations dudit ensemble d'adaptation.

5. Machine suivant la revendication 4, caractérisée en ce que lesdits premier et second organes élastiques sont respectivement constitués par un premier ressort à lame (79) en forme de losange fixé d'une part audit poussoir (78) et portant ledit doigt (80) et par un second ressort à lame (82) en forme de losange moins raide que le premier et fixé à celui-ci avec ledit doigt (80) destiné à coopérer avec l'organe mobile (85) dudit commutateur (41).

6. Machine suivant la revendication 4, caractérisée en ce que lesdits premier et second organes élastiques sont respectivement constitués par un premier ressort hélicoïdal (86) monté entre ledit poussoir (91) et une pièce intermédiaire (93) portant ledit doigt (94) et par un second ressort hélicoïdal (87) moins raide que le premier prenant appui sur ladite pièce intermédiaire (93) et sur une cloison fixe (83) de la machine.

7. Machine suivant l'une quelconque des revendications 1 à 6, dans laquelle le dispositif d'affichage (7) est constitué par des groupes de diodes électroluminescentes ($a_c$ à $g_c$; $a_m$ à $g_m$) dont l'allumage est destiné à former des segments des chiffres à afficher, caractérisée en ce que lesdits moyens électroniques de commande (37 à 66) du dispositif d'affichage sont conçus pour assurer l'affichage des seuls nombres contenus dans un tableau (8) prédéterminé de valeurs correspondant à des plages de vitesses dans lesquelles la machine est destinée à fonctionner et comprennent à cet effet autant d'étages que le tableau (8) comporte de colonnes.

8. Machine suivant l'une quelconque des revendications 1 à 7, caractérisée en ce que lesdits moyens de commutation sont constitués par un commutateur (23; 35) à plusieurs positions correspondant chacune à un étage desdits moyens électroniques de commande, ledit commutateur (23; 35) étant couplé mécaniquement à un commutateur (29; 36) de réglage du variateur de vitesse du moteur d'entraînement de la machine.

## Patentansprüche

1. Maschine, insbesondere elektrische Bohrmaschine, mit einem elektrischen Antriebsmotor, einem mit der Abtriebswelle des Motors verbundenen Untersetzungsgetriebe mit mindestens zwei mechanischen Untersetzungsstufen, mit Einrichtungen (3, 72, 75) für die Veränderung der mechanischen Untersetzungsstufen, einer Einrichtung für die Drehzahländerung des Elektromotors und mit Einrichtungen (7, 35, 36, 41) für die Wahl und Anzeige der Umlaufgeschwindigkeit des Elektromotors, welche an die Einrichtungen für die Veränderung der Untersetzungsstufen gekoppelt sind, dadurch gekennzeichnet, daß die Einrichtungen für die Wahl und Anzeige eine Anzeigevorrichtung (7), elektronische Elemente (9 bis 27; 37 bis 66) zur Steuerung der Anzeigevorrichtung (7) entsprechend der anzuzeigenden Zahlenwerte, erste an die Einrichtungen (3, 72, 75) für die Veränderung der mechanischen Untersetzungsstufe gekoppelte Schaltelemente (41), um die elektronischen Steuerelemente (9 bis 27; 37 bis 66) in einen Zustand der Anzeige einer Gruppe von Zahlenwerten zu versetzen, die der Position der ersten Schaltelemente entsprechen, sowie zweite Schaltelemente (23, 35) aufweisen, um die elektronischen Steuerelemente in einen Steuerzustand der Anzeige einer bestimmten Anzahl aus der genannten Gruppe von Zahlenwerten zu versetzen.

2. Maschine nach Anspruch 1, dadurch gekennzeichnet, daß die ersten Schaltelemente (41) aus einem Schalter bestehen, dessen beweglicher Teil (85) mechanisch mit den Einrichtungen für die Veränderung der mechanischen Untersetzungsstufen über eine Anordnung für die Anpassung der Bewegung der Einrichtungen für die Veränderung der mechanischen Untersetzungsstufen an die Bewegung des beweglichen Teils (85) des genannten Schalters (41) verbunden ist.

3. Maschine nach Anspruch 2, deren Einrichtungen für die Veränderung der mechanischen Untersetzungsstufen eine Schaltgabel (75) für die axiale Verschiebung eines Rades (72) mit mindestens zwei Zahnungen entlang der Maschinenspindel aufweisen, wobei die Schaltgabel mechanisch mit einem Bedienungsknopf (3) verbunden ist, dadurch gekennzeichnet, daß die Anpaßeinrichtung einen Stößel (78; 91) zur Betätigung durch die Schaltgabel (75) aufweist, welcher an seinem von der Schaltgabel abgewandten Ende ein erstes elastisches Element (79; 86) für die Betätigung eines Fingers (80; 94) aufweist, welcher mit dem beweglichen Teil (85) des Schalters in Berührung gelangen soll.

4. Maschine nach Anspruch 2, dadurch gekennzeichnet, daß zwischen dem ersten elastischen Element (79; 86) und einer festen Trennwand (83) der Maschine ein zweites elastisches Element (82, 87) angeordnet ist, welches flexibler ausgebildet ist als das erste und dazu dient, die Vibrationen der Anpaßanordnung auf ein Minimum zu reduzieren.

5. Maschine nach Anspruch 4, dadurch gekennzeichnet, daß das erste und zweite elastische Element jeweils aus einer ersten Blattfeder (79) in Form einer Raute besteht, welche mit einer Seite an dem Stößel (78) befestigt ist und den Finger (80) trägt, sowie aus einer zweiten Blattfeder (82) in Form einer Raute, welche flexibler als die erste ausgebildet ist und an dieser, den Finger (80) tragenden, befestigt ist, der 5 mit dem beweglichen Element (85) des Schalters (41) zusammenwirkt.

6. Maschine nach Anspruch 4, dadurch gekennzeichnet, daß das erste und zweite elastische Element jeweils aus einer ersten Spiralfeder (86) besteht, welche zwischen dem Stößel (91) und einem Zwischenstück (93) mit einem Finger (94) angeordnet ist, sowie aus einer zweiten Spiralfeder (87), welche flexibler ausgebildet ist als die erste und sich an dem Zwischenstück (93) und an der festen Trennwand (83) der Maschine abstützt.

7. Maschine nach einem der Ansprüche 1 bis 6, bei welcher die Anzeige (7) aus Gruppen von elektrolumineszierenden Dioden ($a_c$ bis $g_c$ $a_m$ bis $g_m$) besteht, deren Aufleuchten der Bildung von Segmenten der anzuzeigenden Zahlenwerte dient, dadurch gekennzeichnet, daß die elektronischen Anzeigesteuerelemente (37 bis 66) so ausgelegt sind, daß lediglich die vorbestimmten Zahlenwerte angezeigt werden, die in einer Tabelle (8) enthalten sind und Drehzahlbereichen entsprechen, die für den Betrieb der Maschine erforderlich sind, und hierfür ebensoviele Stufen umfassen, wie die Tabelle (8) Spalten aufweist.

8. Maschine nach einem der Ansprüche 1 bis 7, dadurch gekennzeichnet, dan die Umschalteinrichtungen aus einem Schalter (23; 35) mit mehreren Schaltstellungen bestehen, die jeweils einer Stufe der elektronischen Steuerelemente entsprechen, wobei der Schalter (23; 35) mechanisch mit einem Schalter (29; 36) zur Drehzahlanderung des Antriebsmotors der Maschine gekoppelt ist.

## Claims

1. Machine, in particular an electric drilling machine, comprising an electric driving motor, a speed reducer having at least two mechanical ratios on the output shaft of the motor, means (3, 72, 75) for changing the mechanical ratio, a speed variator for the electric motor and means (7; 35; 36; 41) for selecting and displaying the speeds of rotation of the electric motor coupled to said mechanical ratio changing means, characterized in that said selecting and displaying means comprise a display device (7), electronic means (9 to 27; 37 to 66) for controlling the display device (7) in accordance with the numbers to be displayed, first switching means (41) coupled to the mechanical ratio changing means (3; 72; 75) for placing said electronic control means (9 to 27; 37 to 66) in a state for displaying a group of numbers corresponding to the position of said first switching means, and second switching means (23; 35) for placing said electronic control means in a state for displaying a number among said group of numbers.

2. Machine according to claim 1, characterized in that said first switching means (41) are constitued by a switch whose moving element (85) is mechanically connected to the mechanical ratio changing means through a unit for adapting the travel of the mechanical ratio changing means to the travel of the movable element (85) of said switch (41).

3. Machine according to claim 2, whose mechanical ratio changing means comprise a fork (75) for axially shifting a wheel (72) having at least two sets of teeth along the spindle of said machine, said fork being mechanically connected to an actuating knob (3), characterized in that said adaptation unit comprises a push-member (78; 91) adapted to be actuated by said fork (75) and carrying at its end opposed to the latter a first elastic element (79; 86) for actuating a finger member (81; 94) adapted to come into contact with the moving element (85) of the switch.

4. Machine according to claim 2, characterized in that there is placed, between said first elastic element (79; 86) and a fixed partition (83) of the machine, a second elastic element (82; 87) which is less stiff than the first and adapted to reduce to a minimum the vibrations of said adaptation unit.

5. Machine according to claim 4, characterized in that said first and second elastic elements are respectively constituted by a first spring strip (79) in the shape of a diamond fixed to said pushmember (78) and carrying said finger member (80) and by a second spring strip (82) in the shape of a diamond which is less stiff than the first and fixed to the latter, with said finger member (80) adapted to co-operate with the moving element (85) of said switch (41).

6. Machine according to claim 4, characterized in that said first and secon elastic elements are respectively constituted by a first coil spring (86) mounted between said push-member (91) and an intermediate member (93), carrying said finger member (94) an by a second coil spring (87) which is less stiff than the first and bears against said intermediate member (93) and against a fixed partition (83) of the machine.

7. Machine according to any one of the claims 1 to 6, wherein the display device (7) is constituted by groups of electroluminescent diodes ($a_c$ to $g_c$; $a_m$ to $g_m$), the illustration of which is adapted to form segments of figures to be displayed, characterized in that said electronic control means (37 to 66) of the display device are designed to ensure the display only of numbers contained in a predetermined table (8) of values, corresponding to speed ranges in which the machine is adapted to operate, and comprising for this purpose as many stages as the table (8) comprises columns.

8. Machine according to any of the claims 1 to 7, characterized in that said switching means are constituted by a switch (23; 35) having a plurality of positions each corresponding to a stage of said electronic control means, said switch (23; 35) being mechanically coupled to a switch (29; 36) regulating the speed variator of the driving motor of the machine.

FIG. 1

FIG. 6

FIG. 7

FIG. 8

0 082 028

## FIG.2

## FIG.3

## FIG.4

3

FIG.5